# EUROPEAN PATENT SPECIFICATION

(11) **EP 2 048 867 B1**
(45) Date of publication and mention of the grant of the patent: **16.05.2012**
(21) Application number: 07019847.8
(22) Date of filing: 10.10.2007
(51) Int. Cl.: H04N 1/32

(54) **Method and system for generation and verification of a digital seal on an analog document**
Verfahren und System zur Erzeugung und Überprüfung einer digitalen Vorrichtung eines analogen Dokuments
Procédé et système de génération et de vérification d'un joint numérique sur un document analogue

(43) Date of publication of application: 15.04.2009
(73) Proprietor: Deutsche Thomson OHG, 30625 Hannover (DE)
(72) Inventor: Koch, Eckhard Dr., 45768 Marl (DE); Kubbilun, Wolfgang Dipl-Math., 45127 Essen (DE)
(74) Representative: Rösler, Uwe

(56) References cited:
- WO-A-00/68875
- WO-A-01/15382
- WO-A-03/009217
- US-A1- 2004 145 661
- US-A1- 2005 066 172
- US-A1- 2005 207 614

## Description

### Technical Field

The invention relates to a method and a system for generation and verification of a digital seal on an analog document.

### State of the Art

The threat of document forgery today is higher than ever. With new developments in copy and printing technologies and the disposition of vast budgets for ID forgery in organized crime and terrorism, anti-counterfeiting technologies must be kept up to date rapidly. Digital security technologies can help to be always one step ahead counterfeiters. Especially when combined with physical security features to an all comprehensive solution, the barriers against forgery will be on the highest possible level.

One of the challenges in document security is the protection of the integrity and authenticity of information printed on a document, especially ID documents. A well known protection method for ID photo documents which currently becomes introduced in the market is the use of an RFID. Radio-frequency identification is an automatic identification method, relying on storing and remotely retrieving data using devices called RFID tags or transponders. The RFID tag is incorporated into the paper document and offers a relative high amount of memory for digital data. Hence it is possible to link information like digital certificates or biometrical data to the ID document and therewith to its bearer. Nevertheless, the RFID solution comes with some disadvantages, so the integration of the hardware into existing production processes is complex and still expensive; also different RFID protected documents in a heap seem to interfere with each other which could prevent a proper verification of the documents. It is additionally imaginable that the chip gets broken or an attacker tries to intentionally disturb the radio transmission and therewith take influence on the verification.
With the concept of RFID technology the above mentioned disadvantages can not be solved, because the security provided by the RFID tag protects the content on the tag but not the content printed on the document itself.

There have been several further solutions presented in the past which target this protection needs:

EP 1 075 757 relates to a digital authentication with analog documents and describes how the semantic data of a document can be secured by encoding , hashing and signing this semantic data and print a digest of the data in a machine readable representation on the document. This machine readable representation could be a barcode or a watermark. It is mentioned that beside the textual data also image data can be protected by reducing the image data to a representation describing the most relevant image features.

EP 1 413 129 relates to methods and device for confirming authenticity of document and a safe for storing data. Herein the use of signatures and hash functions to protect the textual data of a document are described. The result of the signature process is embedded into the document by use of digital watermarking technologies. Hereby the following disadvantages appear: Digital watermarks have limited data capacity and the protection of image data is not covered.

US 5,668,874 relates to an identification card verification system and method. This patent corresponds to a paper of O'Gorman and Rabinovich: "Secure Identification Documents via Pattern Recognition and Public-key Cryptography", IEEE Transactions on Pattern Analysis and Machine Intelligence, vol. 20, no 10, October 1998. The documents describe mainly how to secure the printed image on an ID card. Therefore a reference image signature is generated. This reference image signature is stored in a database for remote verification or printed in machine-readable form on the ID document. Additionally digital signatures are applied. During verification the reference image signature is retrieved from the database or read from the ID card and has to be compared with the image signature calculated from the scanned image. Both have to match within some tolerance. A reference image signature has to be stored additionally to the image itself for example in an extra database or on the ID card. The verification therefore requires beside of the comparison of hashed textual data the matching of image signatures.

WO 2004/036802 A1 relates to cryptographically secure person identification. This document corresponds to a paper of Kirkovski and Jojic, "Cryptographically secure Identity Certificates", Proceeding of IEEE International Conference on Acoustics, Speech and Signal Processing (ICASSP), vol. 5, May 2004. Here a method to secure the portrait photo and textual information on an ID card is described. The portrait photo is compressed using a compression method based on "eigenfaces", furthermore the textual data are hashed. The compressed image data and the hashed textual data are signed with a digital signature scheme. For verification the hash values of the textual data have to be compared and the uncompressed image has to be compared with the original image. Image comparison has to match within some tolerance. The compressed image still requires high data capacity. To carry this amount of data a non-standard color-barcode is used. The verification requires beside the comparison of hashed textual data the matching of uncompressed image data with the scanned image.

US 2005/207614 A1 discloses a method including forming a feature vector associated with an iris of an individual and forming an iris digest based on the feature vector for creating a biometric identifier based on the iris digest finally. Together with further compressed semantic data a signed message is generated which is implemented on a security document with which a user can be identified.

### Description of the invention

It is an object of the invention to simplify existing methods and systems for protection of documents against counterfeit on the one hand and to guarantee a high or higher level of security on the other hand.

The solution of the object is given in the independent claims 1, 7, 8 and 14.

The inventive idea underlies the fact that a so called machine readable digital seal is embedded in the analog document containing sensible information about the content of the analog document consisting at least of semantic and graphical data. The inventive way how to generate the digital seal leads to the advantage among other things that a high degree of security can be reached, i.e. it is possible to detect already minimal unauthorized changes or alterations on the document. Further the inventive method opens the possibility to prove the integrity of analog documents without the need of providing information for comparison. The inventive method of verification works in an autonomous manner which serves as requirement for a low priced solution and an easy an implementation in existing systems.

The inventive method for generation of a digital seal on an analog document which contains semantic data and graphical data comprises of the following steps:

In a first step a digital representation of an analog document has to be prepared for example by scanning the analog document. This has to be done if the analog document is in form of a printing form for example a paper document. The expression analog document shall also cover illustrations of documents which are ascertainable by a person for example a pdf-document or XML-file displayed on a monitor. In such case the analog document exists in digital form already, a scanning process step isn't necessary. The digital information to be used for generation the analog document could also be retrieved from a database

The analog document typically contains machine readable information which is called semantic data in the following and graphical data like a photo, a logo, a graphical background pattern among other things. Also it is possible to embed audio or video information in an analog document, for example an active field implemented in a pdf-document which opens an audio or sound file when triggered. So for further consideration it is assumed that such audio or video based information shall also be subsumed under the expression graphical data, since there is no difference in treatment of graphical data as mentioned before or in form of multimedia data like audio or video data.

In the second step a visual hash function will be applied to at least a part of said digitized graphical data in order to obtain visual hash values.

Visual or perceptual hash functions are designated hash functions for image or multimedia content. The hash values of visual hash functions are sometimes called fingerprints. Visual hash functions generate different hash values for visually or perceptually different input streams. That means visual hash functions generate different hash values only if the input is perceptually changed. For instance, the fingerprint of a digital portrait photo and the fingerprint of the same photo after printing and scanning should be the same since they have no perceptual difference, although their bit-string representation is different.

The principle basic scheme for visual hash functions is to extract some representative features from an input image. The kind of feature extraction heavily depends on which input set the function operates. A very universal feature extraction could be based on a global frequency transformation, e.g. DCT, Wavelet, of the input. Assumed the input set can be restricted to the set of standard portrait photos, then the feature extraction can be based on certain properties of human faces like the shape of the face, distance of the eyes, or the distance of an eye to the nose etc. The more restricted the input set of data and the possible alterations of the images are defined, the more adapted and accurate the feature extraction can be constructed.

Another challenge of the proposed method is given by the preciseness of the visual hash function. This will be explained in detail on an example of ID document with a portrait photo. The visual hash value or in other word the fingerprint as a result of the visual hash function should be the same for an original digital photo portrait and for this photo portrait after printing and scanning. Therefore the visual hash function has to be robust against print-scan noise and any noise which arises through the usage, like abrasion of the ID document. On the other side it is not required that the visual hash function adapts to changing light conditions or viewing angels as it is required for other biometric applications. Furthermore the visual hash function should be robust against any digital watermarks embedded, otherwise it would not be possible to use the image as data carrier.

As the fingerprint of the visual hash function is hashed using a bit-sensitive cryptographic hash function, it is required that the fingerprints for a valid portrait photo result in bit-wise exactly the same values. This can be achieved by quantizing the values for each of the different feature vectors of the visual hash function. Through this quantization approach the value range of each feature vector is subdivided into sub-ranges, whereby all different values in a single sub-range are considered to have the same value for this feature vector. As consequence of the quantization the error rates might increase slightly if the definition of sub ranges is not done carefully enough. The definition of an appropriate quantization matrix for a given application should be based on a set of chosen feature vectors and corresponding ranges for the feature vector values, both resulting from experimental test with a large image data base. The image data base should be representative for the respective application. In case of an ID document standardized portrait photos should be used as test images.

Despite a quantization it could still happen that a feature value could be assigned to different sub-ranges when producing or verifying the ID document. This would be the case if a feature value is close to the limits of a sub-range. To cover this case it is recommended to define invalid-ranges when calculating the visual hash value. When producing a certain ID document it has to be noted which feature values fall into invalid-ranges.

In order to optimize the result of the visual hash function it would be possible to generate the original fingerprint based on a scanned version of the original image; this scanning could be simulated during the production process.

In a third step a cryptographic hash function will be applied to said quantized visual hash values or fingerprint and at least to a part of said digitized semantic data in order to obtain a hash value. Cryptographic hash functions basically are bit-sensitive, that means changing a single bit in the input stream results in a different hash value. Cryptographic hash functions are well studied nowadays. Examples of functions that are known to be secure and suitable to apply include SHA-1 and RIPE-MD.

In a fourth step a digital signature is created on basis of said hash value and a private key of an issuing authority. A digital signature or digital signature scheme is based on asymmetric cryptography and provides both authentication of origin and integrity of digital data. Normally there are two algorithms, one for signing which involves a user's secret or private key, and one for verifying signatures which involves the user's public key. The result of the signature process is called the "digital signature". Digital signatures are used to create public key infrastructure (PKI) schemes in which a user's public key is tied to a user by a digital identity certificate issued by a certification authority.

In a sixth step the digital signature is embedded into a representation being transformable in a machine-readable analog form representing said so called digital seal. The representation into which the digital signature is included is like a carrier which is printable and machine-readable. Some suitable carriers for the digital data in form of the digital signature are barcodes, watermarks or padding to unused characters of machine readable zone just to name a few. They are shortly described:

A barcode is a graphical symbol encoded in a way that it is suitable to store a certain amount of arbitrary data in it. This data can be read out of a printed version of the barcode. Meanwhile in particular two dimensional barcode symbologies are widespread which are able to store more data than one dimensional barcodes. Examples of well known 2D barcodes include the Datamatrix, the Aztec code and the PDF417 code. 2D barcode schemes make use of error correction techniques in order to be able to correct bit errors.

Digital watermarking refers to a class of algorithms which are able to embed information into multimedia material, e.g. image, logo, background, in an imperceptible manner. A digital watermarking scheme has to fit the requirements of robustness, i.e. the watermark information is not removed if the underlying material is modified, and security, i.e. the watermark can be read only if a secret key is known. Some digital watermark schemes achieve a robustness that enables the watermark information to be read after a digital-analogue or analogue-digital transformation. In the case of image watermarking, the information can be read from a digitized version of the printed image.

The Machine Readable Zone (MRZ) for example of an ID document stores the personal digital data of the document's bearer as pintable characters in a printable format. The MRZ uses only a certain subset of all printable characters. Additionally, the characters are printed in a font which is particularly suitable for optical character recognition (OCR) software. The data encoded into the MRZ can therefore be retrieved from a printed version of the document without the need for intervention by a human being. Nevertheless, it is usually not necessary to consume all of the MRZ's characters to encode the personal data. Unused characters of the MRZ can be identified by the '<' symbol and could be replaced by other characters to carry additional information.

Of course combinations of these data carriers are possible. A graphical seal or signet can be digitally watermarked or coalesced with a barcode-like technology to carry digital data in the printed graphical seal.

Basically it is possible to embed further information into the carrier beside of the digital signature. So it could be of high value that additional information such as certificates or certificate chains are also content of the carrier for purpose of a verification process later on.

One of the limiting factors for the inventive method is the data capacity of the data carriers. Standard 2D barcodes like the PDF417 or data matrix have data capacity of about several hundred bytes per square inch. But with reducing the size of the barcode to an acceptable size and applying an appropriate error correction coding, the data capacity goes down much below 100 bytes. The other carriers described above have similar or lower data capacity than standard 2D barcodes. In order to increase the overall data capacity of the system the machine-readable data, that means the content of the digital signature can be distributed over different carriers, for example by using 2D barcode, digital watermark and padding the unused characters of the MRZ. In case a digital watermark is integrated into the portrait photo or the background of the document to carry parts of the payload it has to be ensured that the visual hash function is not influenced by the embedded digital watermark.

Another variant to reduce the payload is applicable in case the size of the visual fingerprint is smaller or equal to the size of the cryptographic hash function. In this special case the input for the digital signature would be calculated as (Fingerprint XOR Hash(MRZ)) during seal generation. During verification the Fingerprint could be calculated as follows: (Decrypted Signature XOR Hash(MRZ)). Note that the use of the XOR operation in this way eventually means the "storage" of the fingerprint data, without having a negative influence on the security level, because applying XOR two times with the same value Hash(MRZ) mathematically means identity.

On the other side the size of a digital signature is directly related to the key length of the public key system. Recommendations for the key length are given by governmental security institutions to ensure a certain security level and validity period of different signature schemes. The recommended key length of a digital signature scheme increases with the number of years for which the digital signature should be considered as secure. The recommended key length for the most known signature schemes, namely RSA and DSA, should be 2024 bit (253 byte) for the next few years. Because of the limited capacity of the presented carriers these signature schemes are not practical in the presented concept of digital seals although they are widely used in today's security applications. Fortunately signature schemes based on elliptic curves have raised much interest in the last recent years because of the high performance and a smaller key length required to guarantee a certain security level. The Elliptic Curve Digital Signature Algorithm (ECDSA) requires a key-length of 224 bit (28 byte) to provide a security level which is comparable with RSA algorithm using 2024 bit. Therefore the ECDSA is favorably chosen for the implementation of the presented digital seal solution.

In a seventh step the digital seal is embedded in the analog document for example by way of printing in case of a paper document. In case of an analog pdf-document which is perceivably on a monitor the step of embedding the digital seal is a digital operation.

For performing the above listed method a system for generation the digital seal on an analog document which contains semantic data and graphical data comprises at least an optical scanning system for scanning the analog document and transforming it in to a digital representation, a processor coupled to the optical scanning system for performing the above steps 2 to six and a printer coupled to the processor for printing said digital seal on the analog document.

To verify a given analog document containing said digital seal which was generated as described before the following steps have inventively performed which are listed in note form in the following but described in more detail pertaining to a concrete embodiment shown in a figure below:
1) providing said analog document in a digital representation,
2) extracting said digital seal from said digital representation,
3) extracting the digital signature from said digital seal,
4) decrypting said digital signature by using the public key of said issuing authority in order to obtain a decrypted hash value,
5) extracting the digitized semantic data and graphical data from said digital representation,
6) applying the visual hash function to said digitized graphical data in order to obtain visual hash values,
7) quantizing said visual hash values,
8) applying said cryptographic hash function to said quantized visual hash values and said digitized semantic data in order to obtain a hash value and
9) comparing said hash value and said decrypted hash value for purpose of verification.

To perform the before mentioned method a system is required comprising an optical scanning device for scanning the analog document and transforming it in to a digital representation, a processor coupled to the optical scanning device for performing the before listed method steps 2) to 9) and an output device coupled to the processor for indicating the result of the verification.

In comparison to traditional physical document protection methods the before described approach supplies integrity protection of semantic document data as well as a proven authentication of the document via the public key infrastructure. In contrast to most alternative electronic security mechanisms, the inventive approach also protects the integrity of graphical data, like the ID photo image and semantic data like the personal data, for example name, valid period, etc.

This approach is not to be seen as a replacement for an RFID based solution but as a complementary approach. Although the data capacity of a digital seal is limited compared to RFID chips, the digital seal technique as described above has some advantages over the RFID technology:
- different secured ID documents in a heap do not interfere with each other,
- more cost efficient,
- no additional hardware is required,
- the security features are incorporated directly into the digital layout of the document so that no modification of the production process is required, and
- the verification can be done with standard devices already in place.

Some of these advantages become relevant in time critical or low-budget applications. Low budget applications can imply short-time documents or low volume emissions. Time critical solutions imply preliminary ID documents that can be issued at short notice for example at airports.

The digital seal can be used additionally to an RFID based approach and acts then as a backup solution in the case that the reading of the chip fails.
Additionally, the RFID of a given document can be linked to the digital seal by inputting an identification number of the chip, e.g., a serial number into the cryptographic hash function additionally to the other input data. The RFID would therewith be bound to the document so that any replacement could immediately be detected.

Some general advantages of the describe solution can be listed in view of data capacity, matching of images, security and speed:
Data capacity: Use of Elliptic Curves Digital Signatures (Instead of RSA) reduce data volume of signatures clearly. Use of different data carriers, like watermark, barcode, unused characters of machine readable zone, visual seal, in combination can balance the high data capacity.
Matching of Images: The existing solutions referenced above require an additional process of matching the features of the scanned and the original image during the verification process, beside the comparison of the hash values of the textual information. In the described solution this additional image matching is not required, because the visual hash values result in an exact matching. This is achieved through the quantization of the values of the different feature vectors. Security: Security of RFID solutions with ID documents can be increased by integrating the serial number of the chip into the data which will be hashed an signed. Speed: The verification process is faster compared to the known approaches because no matching is necessary at the verification side because of the quantization introduced by the generation procedure. This is an important advantage because the issuing of a document is performed once and is not time-critical, but the verification is performed frequently and is time-critical.

The digital seal approach will be described in the following in the context of an ID photo document. Nevertheless, this technology is suitable to protect a broad range of documents provided that the document is based on a digital image layout or its production process allows the printing of the seal within a post-production step and the document contains semantic data in textual or graphical form in the before mentioned way. The verification of a protected document requires an infrastructure of devices which are capable of digitizing paper input and producing a digital representation. The list of suitable devices includes scanners, digital cameras, web cameras, and camera equipped mobile phones. The verification infrastructure can be either centralized or decentralized.

Examples of documents other than ID photo documents that suit the conditions of the digital seal approach include certificates, notifications, governmental documents, and notarized copies. Those types of documents suggest making use of a centralized verification approach, i.e. the document to be verified has to be digitized, e.g. scanned by the person requiring its verification. The image data of the document is then sent to a central server application which performs the verification steps described above. The result is eventually returned to the requester.

Also, the described approach is not restricted to image documents but can also be used to protect documents with audio and video data embedded as mentioned before. Examples of according document formats include PDF and XML. The Adobe PDF standard has been evolved to the de facto standard for document based information exchange. A PDF document can nowadays carry embedded audio and video data beside graphical or textual information. The proposed digital seal concept can be adapted to protect those documents (the visual hash function must particularly be adapted to audio or video data). In this case it allows a verification of the embedded data even if these are separated from the document. The same is true for XML documents which are able to contain links to audio and/or video data.

### Brief description of the invention

- Fig. 1: Sketch for illustrating the generation of a digital seal on an ID document
- Fig. 2: Sketch for illustration of quantizing of unique image features and
- Fig. 3: Sketch for illustrating the verification of a digital seal.

### Ways for carrying out the invention, commercial usability

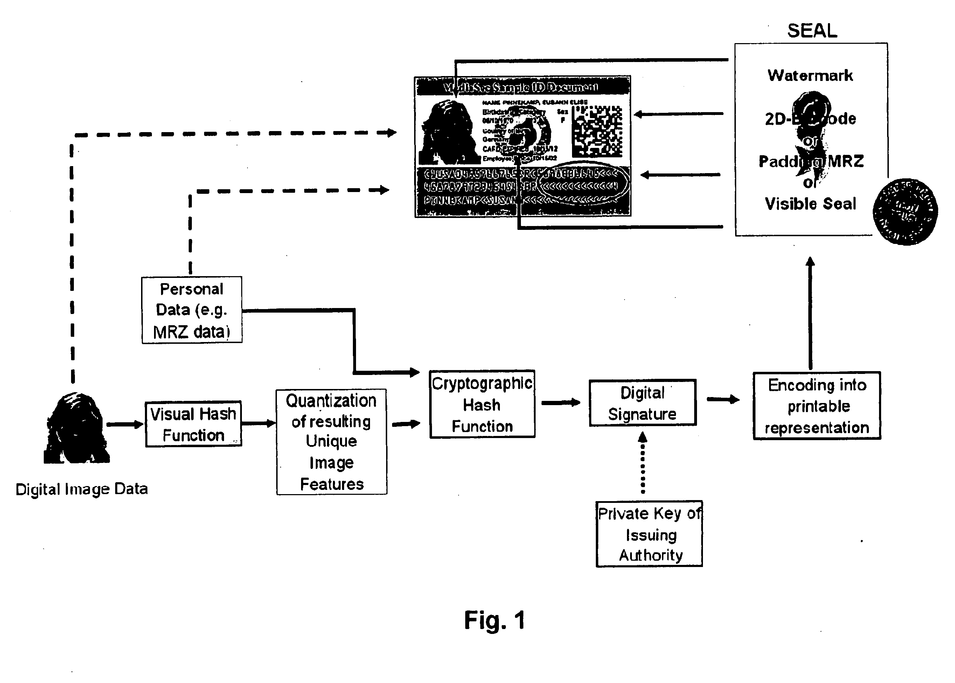

In figure 1 it is assumed that an ID photo document shall be protected, i.e. a document that contains at least a passport photograph (portrait photo) and additionally personal data of the document's bearer like name, date of birth, issuing authority. Examples of such an ID document include passports, VISA, driver licenses, and certain company cards.

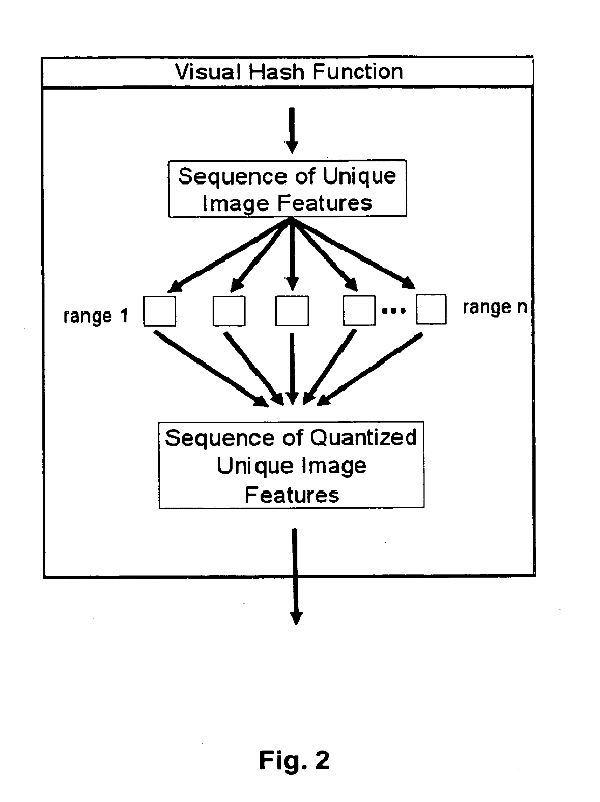

The process of the digital seal generation is described as follows. In order to generate a digital seal, a visual hash function is first applied to the digital image data of the ID photo image. The resulting unique image features are then quantized as depicted in figure 2. This quantization step is introduced to enable the appliance of a cryptographic hash function to the data. The hash value of a slightly rotated or soiled version of an ID photo must not change within this scheme. The concrete implementation of the quantization depends on the concrete visual hash function. In case of a frequency transformation based function one could use certain ranges for the different coefficients as described by the buckets in figure 2. The quantized unique image features together with the digital personal data (name, date of birth) is then inputted into a cryptographic hash function as shown in figure 1. The digital image data and personal data could directly be retrieved from the database linked to the personalization software. This operation results in a hash value which is used to create a digital signature. The signature is generated by the use of the private key of the issuing authority of the ID documents.

After that, the digital signature is encoded into a printable, visible representation which is called "digital seal". This representation can be a digital watermark, for example embedded into the ID photo or into the whole document, a barcode, a padding to the MRZ, a visible seal (carrying data as a digital watermark), or a combination of these. The digital seal is finally printed onto the ID document together with the portrait image and the personal data.

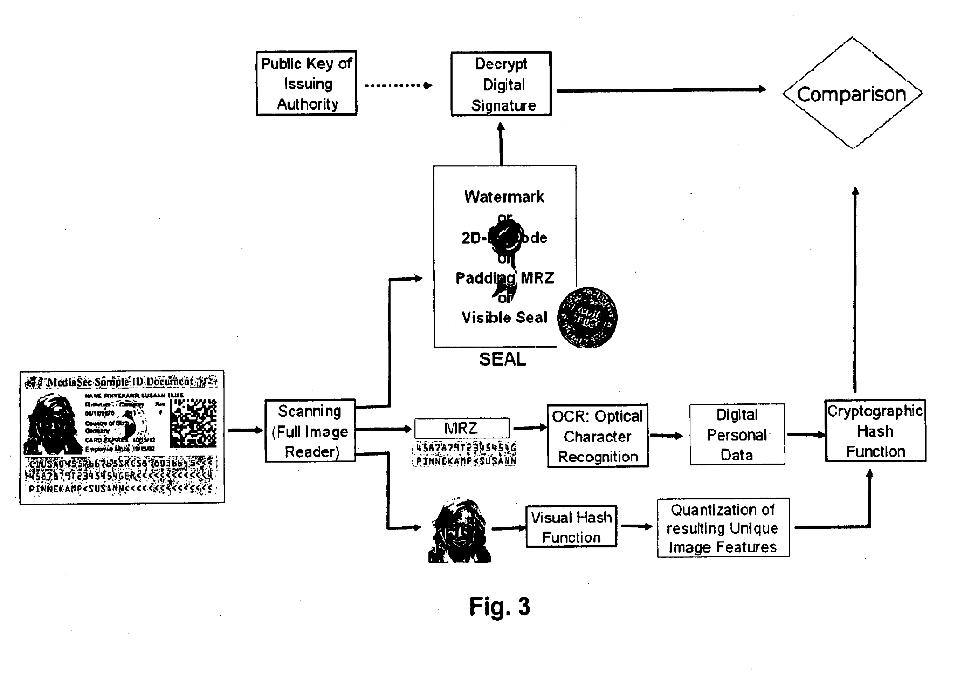

The verification of the digital seal is illustrated in figure 3 and can be described as follows: In order to verify the ID document it has to be scanned using a full image reader or any other scanning device which digitizes the printed surface of the ID document. Then the digital seal is extracted from the digitized image along with the MRZ and the ID photo image. The digital signature of the issuing authority is read directly from the digital seal by using the appropriate reading method, for example a watermark reader, a barcode reader, an OCR, etc. Using the issuing authority's public key the digital signature of the original document can be decrypted in order to obtain the hash value.

The MRZ is processed with an OCR software which results in the textual digital representation of the personal data. The ID photo image is inputted into the visual hash function. The cryptographic hash function is then provided with the resulting quantized unique image features (according to the quantization of the generation process) together with the personal data. This leads to the hash value of the actual ID photo and the MRZ data. This fingerprint is finally compared to the decrypted hash value. If both fingerprints match, then it is proven that neither the ID photo nor the personal data of the ID document have been counterfeited. The use of a visual hash function means the use of a biometrical feature in this scheme. Other biometrical features (fingerprints, hand written signatures, voice recognition) are also imaginable at this point provided that those features can be uniquely represented by a bit stream enabling the comparison of a stored bit stream to an actually calculated one.

## Claims

1. Method for generation of a digital seal on an analog document which contains semantic data and graphical data comprising the steps of:
- acquiring at least parts of said semantic data and graphical data in digital form,
- applying a visual hash function to at least a part of the digital graphical data in order to obtain visual hash values,
- quantizing said visual hash values for each of different feature vectors of the visual hash function such that a value range of each different feature vector is subdivided into sub-ranges and all different values in a single sub-range are assigned one value,
- applying a cryptographical hash function to said quantized visual hash values and at least to a part of digital semantic data in order to obtain a second hash value,
- creating a digital signature on the basis of said second hash value and a private key of an issuing authority,
- encoding said digital signature into a digital seal, and
- embedding said digital seal in the analog document.

2. Method according to claim 1,
wherein said digital seal is one of a digital watermark, 1 D- or 2D-barcode, padding to unused characters of machine readable zone, visible seal, RFID, magnetic stripe.

3. Method according to claim 2,
wherein said encoding of the digital signature is performed by distributing the content of the digital signature over different digital seals.

4. Method according to claim 2 or 3,
wherein in at least one of said digital seals a certificate or a certificate chain for verification purposes is embedded.

5. Method according to one of the claims 1 to 4,
wherein in case of the visual hash values being smaller or equal to the size of the cryptographic hash function creating the digital signature is performed on basis of the following function:
(visual hash value XOR Hash(MRZ),
with Hash(MRZ) is a hash value based only on digitized semantic data, and using and the private key of an issuing authority

6. Method according to one of the claims 1 to 5,
wherein said creating the digital signature will be performed on basis of an Elliptic Curve Digital Signature (ECDSA).

7. System for generation of a digital seal on an analog document which contains semantic data and graphical data comprising
- an optical scanning system for scanning the semantic data and graphical data and transforming it in to a digital form,
- a processor coupled to the optical scanning system for performing the following steps:
- applying a visual hash function to at least a part of the digital graphical data in order to obtain visual hash values
- quantizing said visual hash values for each of different feature vectors of the visual hash function, such that a value range of each different feature vector is subdivided into sub-ranges and all different values in a single sub-range are assigned one value,
- applying a cryptographic hash function to said quantized visual hash values and at least to a part of digital semantic data in order to obtain a second hash value,
- creating a digital signature on the basis of said second hash value and a private key of an issuing authority,
- encoding said digital signature into a digital seal and
- a printer coupled to the processor for printing said digital seal on the analog document, or
- means for storing said digital seal in a RFID or in a magnetic strip.

8. Method for verification of a digital seal on an analog document which contains semantic data and graphical data and being generated by a method according to one of the claims 1 to 6 comprising the steps of:
- acquiring said semantic data and graphical data in a digital form,
- extracting said digital seal from said digital form,
- extracting the digital signature from said digital seal,
- decrypting said digital signature by using the public key of said issuing authority in order to obtain a decrypted hash value,
- extracting digital semantic data and graphical data from said digital form,
- applying the visual hash function to said digital graphical data in order to obtain visual hash values,
- quantizing said visual hash values for each of different feature vectors of the visual hash function, such that a value range of each different feature vector is subdivided into sub-ranges and all different values in a single sub-range are assigned one value,
- applying said cryptographic hash function to said quantized visual hash values and said digital semantic data in order to obtain a second hash value and
- comparing said second hash value and said decrypted hash value for purpose of verification.

9. Method according to claim 8,
wherein extracting said digital seal from said digital form is performed along with an extraction of the semantic and graphical data from said digital form.

10. Method according to claim 8 or 9,
wherein said semantic data is read with an OCR software.

11. Method according to claim 8,
wherein the digital signature is read directly from the digital seal using an appropriate reading method.

12. Method according to claim 8,
wherein in case of matching of the decrypted hash value and the hash value the digital seal is verified.

13. Method according to 8,
wherein a certificate or a certificate chain for verification purposes is read from the digital seal.

14. System for verification of a digital seal on an analog document which contains semantic data and graphical data comprising
- an optical scanning system for scanning the semantic data and graphical data and transforming it in to a digital form,
- a processor coupled to the optical scanning system for performing the following steps:
- extracting said digital seal from said digital form,
- extracting a digital signature from said digital seal,
- decrypting said digital signature by using a public key of said issuing authority in order to obtain a decrypted hash value,
- extracting the digital semantic data and graphical data from said digital form,
- applying the visual hash function to said digtal graphical data in order to obtain visual hash values,
- quantizing said visual hash values for each of different feature vectors of the visual hash function, such that a value range of each different feature vector is subdivided into sub-ranges and all different values in a single sub-range are assigned one value,
- applying a cryptographic hash function to said quantized visual hash values and said digital semantic data in order to obtain a second hash value,
- comparing said second hash value and said decrypted hash value for purpose of verification,
- an output device coupled to the processor for indicating the result of the verification.

15. System according to claim 14,
wherein a watermark reader, a barcode reader, an OCR-reader, a RFID-reader or a magnetic strip reader is provided for extracting the digital signature from said digital seal.

16. Method according one of the claims 1 to 6 and 8 to 13,
wherein said analog document is one of an ID document including at least personal data as semantic data and a photo as graphical data, an event ticket or a document of proof of authority.

17. Method according to one of the claims 1 to 6 and 8 to 13,
wherein said graphical data contains beside a photo, 2-D graphics and audio or video data.

## Patentansprüche

1. Verfahren zum Erzeugen eines digitalen Siegels an einem analogen Dokument, welches semantische Daten und graphische Daten enthält, umfassend die Schritte:
- Erfassen wenigstens von Teilen der semantischen Daten und der graphischen Daten in digitaler Form,
- Anwenden einer visuellen Hash-Funktion auf wenigstens einen Teil der digitalen graphischen Daten, um visuelle Hash-Werte zu ermitteln,
- Quantisieren der visuellen Hash-Werte für jeden der verschiedenen Feature-Vektoren der visuellen Hash-Funktion derart, dass ein Wertebereich eines jeden der verschiedenen Feature-Vektoren unterteilt wird in Teilbereiche, und dass alle der verschiedenen Werte in einem einzigen Teilbereich einem Wert zugeordnet werden,
- Anwenden einer kryptographischen Hash-Funktion auf die quantisierten visuellen Hash-Werte und wenigstens auf einen Teil der digitalen semantischen Daten, um einen zweiten Hash-Wert zu ermitteln,
- Herstellen einer digitalen Signatur auf Basis des zweiten Hash-Werts und eines privaten Schlüssels einer ausstellenden Stelle,
- Codieren der digitalen Signatur zu einem digitalen Siegel, und
- Einbetten des digitalen Siegels in das analoge Dokument.

2. Verfahren nach Anspruch 1, wobei das digitale Siegel eines ist von einem digitalen Wasserzeichen, einem 1D-oder 2D-Barcode, einer Auffüllung ungenutzter Zeichen der maschinenlesbaren Zone, einem sichtbaren Siegel, einem RFID, einem Magnetstreifen.

3. Verfahren nach Anspruch 2, wobei das Codieren der digitalen Signatur ausgeführt wird durch Aufteilen des Inhalts der digitalen Signatur auf verschiedene digitale Siegel.

4. Verfahren nach Anspruch 2 oder 3, wobei in wenigstens einem der digitalen Siegel ein Zertifikat oder eine Zertifikatskette zu Zwecken des Verifizierens eingebettet wird.

5. Verfahren nach einem der Ansprüche 1 bis 4, wobei, in dem Fall, dass die visuellen Hash-Werte kleiner oder gleich sind der Größe der kryptographischen Hash-Funktion, das Herstellen der digitalen Signatur ausgeführt wird, auf Basis der folgenden Funktion:
visueller Hash-Wert XOR Hash(MRZ),
wobei Hash(MRZ) ein Hash-Wert ist, der nur auf digitalisierten semantischen Daten beruht, und der den privaten Schlüssel einer ausstellenden Stelle benutzt.

6. Verfahren nach einem der Ansprüche 1 bis 5, wobei das Herstellen der digitalen Signatur auf Basis einer Elliptic Curve Digital Signature (ECDSA) ausgeführt wird.

7. System zum Erzeugen eines digitalen Siegels an einem analogen Dokument, welches semantische Daten und graphische Daten enthält, umfassend:
- ein optisches Scanner-System zum Scannen der semantischen Daten und der graphischen Daten und zum Umwandeln derselben in eine digitale Form,
- einen Prozessor, gekoppelt mit dem optischen Scanner-System, zum Ausführen der folgenden Schritte:
- Anwenden einer visuellen Hash-Funktion auf wenigstens einen Teil der digitalen graphischen Daten, um visuelle Hash-Werte zu ermitteln,
- Quantisieren der visuellen Hash-Werte für jeden der verschiedenen Feature-Vektoren der visuellen Hash-Funktion derart, dass ein Wertebereich eines jeden der verschiedenen Feature-Vektoren unterteilt wird in Teilbereiche, und dass alle der verschiedenen Werte in einem einzigen Teilbereich einem Wert zugeordnet werden,
- Anwenden einer kryptographischen Hash-Funktion auf die quantisierten visuellen Hash-Werte und wenigstens auf einen Teil der digitalen semantischen Daten, um einen zweiten Hash-Wert zu ermitteln,
- Herstellen einer digitalen Signatur auf Basis des zweiten Hash-Werts und eines privaten Schlüssels einer ausstellenden Stelle,
- Codieren der digitalen Signatur zu einem digitalen Siegel, und
- einen Drucker, gekoppelt mit dem Prozessor, zum Drucken des digitalen Siegels auf das analoge Dokument, oder
- Mittel zum Speichern des digitalen Siegels in einem RFID oder auf einem Magnetstreifen.

8. Verfahren zum Verifizieren eines digitalen Siegels an einem analogen Dokument, welches semantische Daten und graphische Daten enthält, wobei das Siegel erzeugt ist durch ein Verfahren nach einem der Ansprüche 1 bis 6, umfassend die Schritte:
- Erfassen der semantischen Daten und der graphischen Daten in digitaler Form,
- Extrahieren des digitalen Siegels aus der digitalen Form,
- Extrahieren der digitalen Signatur aus dem digitalen Siegel,
- Entschlüsseln der digitalen Signatur durch Benutzen des öffentlichen Schlüssels der ausstellenden Stelle, um einen entschlüsselten Hash-Wert zu ermitteln,
- Extrahieren digitaler semantischer Daten und graphischer Daten aus der digitalen Form,
- Anwenden der visuellen Hash-Funktion auf die digitalen graphischen Daten, um visuelle Hash-Werte zu ermitteln,
- Quantisieren der visuellen Hash-Werte für jeden der verschiedenen Feature-Vektoren der visuellen Hash-Funktion derart, dass ein Wertebereich eines jeden der verschiedenen Feature-Vektoren unterteilt wird in Teilbereiche, und dass alle der verschiedenen Werte in einem einzigen Teilbereich einem Wert zugeordnet werden,
- Anwenden der kryptographischen Hash-Funktion auf die quantisierten visuellen Hash-Werte und die digitalen semantischen Daten, um einen zweiten Hash-Wert zu ermitteln, und
- Vergleichen des zweiten Hash-Werts und des entschlüsselten Hash-Werts zu Zwecken des Verifizierens.

9. Verfahren nach Anspruch 8, wobei das Extrahieren des digitalen Siegels aus der digitalen Form gemeinsam mit einem Extrahieren der semantischen und graphischen Daten aus der digitalen Form ausgeführt wird.

10. Verfahren nach Anspruch 8 oder 9, wobei die semantischen Daten mittels einer OCR-Software gelesen werden.

11. Verfahren nach Anspruch 8, wobei die digitale Signatur direkt aus dem digitalen Siegel gelesen wird, wobei ein geeignetes Verfahren zum Lesen benutzt wird.

12. Verfahren nach Anspruch 8, wobei in dem Fall eines Übereinstimmens des entschlüsselten Hash-Werts und des Hash-Werts, das digitale Siegel verifiziert wird.

13. Verfahren nach Anspruch 8, wobei ein Zertifikat oder eine Zertifikatskette zu Zwecken des Verifizierens aus dem digitalen Siegel gelesen wird.

14. System zum Verifizieren eines digitalen Siegels an einem analogen Dokument, welches semantische Daten und graphische Daten enthält, umfassend:
- ein optisches Scanner-System zum Scannen der semantischen Daten und der graphischen Daten und zum Umwandeln derselben in eine digitale Form,
- einen Prozessor, gekoppelt mit dem optischen Scanner-System, zum Ausführen der folgenden Schritte:
- Extrahieren des digitalen Siegels aus der digitalen Form,
- Extrahieren einer digitalen Signatur aus dem digitalen Siegel,
- Entschlüsseln der digitalen Signatur durch Benutzen eines öffentlichen Schlüssels der ausstellenden Stelle, um einen entschlüsselten Hash-Wert zu ermitteln,
- Extrahieren digitaler semantischer Daten und graphischer Daten aus der digitalen Form,
- Anwenden der visuellen Hash-Funktion auf die digtalen graphischen Daten, um visuelle Hash-Werte zu ermitteln,
- Quantisieren der visuellen Hash-Werte für jeden der verschiedenen Feature-Vektoren der visuellen Hash-Funktion derart, dass ein Wertebereich eines jeden der verschiedenen Feature-Vektoren unterteilt wird in Teilbereiche, und dass alle der verschiedenen Werte in einem einzigen Teilbereich einem Wert zugeordnet werden,
- Anwenden einer kryptographischen Hash-Funktion auf die quantisierten visuellen Hash-Werte und die digitalen semantischen Daten, um einen zweiten Hash-Wert zu ermitteln,
- Vergleichen des zweiten Hash-Werts und des entschlüsselten Hash-Werts zu Zwecken des Verifizierens,
- eine Ausgabe-Vorrichtung, gekoppelt mit dem Prozessor, zum Anzeigen des Ergebnisses des Verifizierens.

15. System nach Anspruch 14, wobei ein Wasserzeichen-Lesegerät, ein Barcode-Lesegerät, ein OCR-Lesegerät, ein RFID-Lesegerät oder ein Magnetstreifen-Lesegerät bereitgestellt ist zum Extrahieren der digitalen Signatur aus dem digitalen Siegel.

16. Verfahren nach einem der Ansprüche 1 bis 6 und 8 bis 13, wobei das analoge Dokument eines ist von einem Identitätsdokument, welches wenigstens personenbezogene Daten als semantische Daten und ein Foto als graphische Daten enthält, einer Eintrittskarte oder einem Dokument zum Nachweis einer Berechtigung.

17. Verfahren nach einem der Ansprüche 1 bis 6 und 8 bis 13, wobei die graphischen Daten, neben einem Foto, 2-D Graphiken und Audio- oder Videodaten umfassen.

## Revendications

1. Procédé de génération d'un sceau numérique sur un document analogique contenant des données sémantiques et des données graphiques, comprenant les étapes de :
- l'acquisition d'au moins des parties desdites données sémantiques et desdites données graphiques dans une forme numérique,
- l'application d'une fonction de hachage visuel à au moins une partie des données graphiques numériques afin d'obtenir des valeurs de hachage visuel,
- la quantification desdites valeurs de hachage visuel pour chacun de différents vecteurs de caractéristique de la fonction de hachage visuel de sorte qu'une plage de valeurs de chaque vecteur de caractéristique différent soit subdivisée en sous-plages et qu'une valeur soit assignée à toutes les valeurs différentes dans une sous-plage unique,
- l'application d'une fonction de hachage cryptographique aux dites valeurs de hachage visuel quantifiées et à au moins une partie des données sémantiques numériques afin d'obtenir une deuxième valeur de hachage,
- la création d'une signature numérique sur la base de ladite deuxième valeur de hachage et d'une clé privée d'une autorité émettrice,
- le codage de ladite signature numérique dans un sceau numérique, et
- l'intégration dudit sceau numérique au document analogique.

2. Procédé selon la revendication 1,
dans lequel ledit sceau numérique est l'un d'un filigrane numérique, un code-barres unidimensionnel ou bidimensionnel, un remplissage de caractères inutilisés de zone lisible par machine, un sceau visible, une étiquette de radio-identification, et une bande magnétique.

3. Procédé selon la revendication 2,
dans lequel ledit codage de la signature numérique est effectué en distribuant le contenu de la signature numérique sur différents sceaux numériques.

4. Procédé selon la revendication 2 ou 3,
dans lequel un certificat ou une chaîne de certificat est intégré à au moins l'un desdits sceaux numériques à des fins de vérification.

5. Procédé selon l'une des revendications 1 à 4,
dans lequel dans le cas où les valeurs de hachage visuel sont inférieures ou égales à la taille de la fonction de hachage cryptographique, la création de la signature numérique est effectuée sur la base de la fonction suivante :
(valeur de hachage visuel XOR Hash(MRZ)),
où Hash(MRZ) est une valeur de hachage basée uniquement sur des données sémantiques numérisées et utilisant la clé privée d'une autorité émettrice.

6. Procédé selon l'une des revendications 1 à 5,
dans lequel ladite création de la signature numérique est effectuée sur la base d'une signature numérique à courbe elliptique (ECDSA).

7. Système de génération d'un sceau numérique sur un document analogique contenant des données sémantiques et des données graphiques, comprenant :
- un système de scannage optique pour scanner les données sémantiques et les données graphiques et les transformer dans une forme numérique,
- un processeur couplé au système de scannage optique pour effectuer les étapes suivantes :
- l'application d'une fonction de hachage visuel à au moins une partie des données graphiques numériques afin d'obtenir des valeurs de hachage visuel,
- la quantification desdites valeurs de hachage visuel pour chacun de différents vecteurs de caractéristique de la fonction de hachage visuel, de sorte qu'une plage de valeurs de chaque vecteur de caractéristique différent soit subdivisée en sous-plages et qu'une valeur soit assignée à toutes les valeurs différentes dans une sous-plage unique,
- l'application d'une fonction de hachage cryptographique aux dites valeurs de hachage visuel quantifiées et à au moins une partie des données sémantiques numériques afin d'obtenir une deuxième valeur de hachage,
- la création d'une signature numérique sur la base de ladite deuxième valeur de hachage et d'une clé privée d'une autorité émettrice,
- le codage de ladite signature numérique dans un sceau numérique, et
- une imprimante couplée au processeur pour imprimer ledit sceau numérique sur le document analogique, ou
- un moyen pour stocker ledit sceau numérique dans une étiquette de radio-identification ou dans une bande magnétique.

8. Procédé de vérification d'un sceau numérique sur un document analogique contenant des données sémantiques et des données graphiques et étant généré par un procédé selon l'une des vérifications 1 à 6, comprenant les étapes de :
- l'acquisition desdites données sémantiques et desdites données graphiques dans une forme numérique,
- l'extraction dudit sceau numérique de ladite forme numérique,
- l'extraction de la signature numérique dudit sceau numérique,
- le décryptage de ladite signature numérique en utilisant la clé publique de ladite autorité émettrice afin d'obtenir une valeur de hachage décryptée,
- l'extraction de données sémantiques numériques et de données graphiques numériques de ladite forme numérique,
- l'application de la fonction de hachage visuel aux dites données graphiques numériques afin d'obtenir des valeurs de hachage visuel,
- la quantification desdites valeurs de hachage visuel pour chacun de différents vecteurs de caractéristique de la fonction de hachage visuel, de sorte qu'une plage de valeurs de chaque vecteur de caractéristique différent soit subdivisée en sous-plages et qu'une valeur soit assignée à toutes les valeurs différentes dans une sous-plage unique,
- l'application de ladite fonction de hachage cryptographique aux dites valeurs de hachage visuel quantifiées et aux dites données sémantiques numériques afin d'obtenir une deuxième valeur de hachage, et
- la comparaison de ladite deuxième valeur de hachage et de ladite valeur de hachage décryptée à des fins de vérification.

9. Procédé selon la revendication 8,
dans lequel l'extraction dudit sceau numérique de ladite forme numérique est effectuée avec une extraction des données sémantiques et graphiques de ladite forme numérique.

10. Procédé selon la revendication 8 ou 9,
dans lequel lesdites données sémantiques sont lues avec un logiciel OCR.

11. Procédé selon la revendication 8,
dans lequel la signature numérique est lue directement du sceau numérique en utilisant un procédé de lecture approprié.

12. Procédé selon la revendication 8,
dans lequel en cas de correspondance entre la valeur de hachage décryptée et la valeur de hachage, le sceau numérique est vérifié.

13. Procédé selon la revendication 8,
dans lequel un certificat ou une chaîne de certificat est lue à partir du sceau numérique à des fins de vérification.

14. Système de vérification d'un sceau numérique sur un document analogique contenant des données sémantiques et des données graphiques, comprenant :
- un système de scannage optique pour scanner les données sémantiques et les données graphiques et les transformer dans une forme numérique,
- un processeur couplé au système de scannage optique pour effectuer les étapes suivantes :
- l'extraction dudit sceau numérique de ladite forme numérique,
- l'extraction d'une signature numérique dudit sceau numérique,
- le décryptage de ladite signature numérique en utilisant une clé publique de ladite autorité émettrice afin d'obtenir une valeur de hachage décryptée,
- l'extraction des données sémantiques numériques et des données graphiques numériques de ladite forme numérique,
- l'application de la fonction de hachage visuel aux dites données graphiques numériques afin d'obtenir des valeurs de hachage visuel,
- la quantification desdites valeurs de hachage visuel pour chacun de différents vecteurs de caractéristique de la fonction de hachage visuel, de sorte qu'une plage de valeurs de chaque vecteur de caractéristique différent soit subdivisée en sous-plages et qu'une valeur soit assignée à toutes les valeurs différentes dans une sous-plage unique,
- l'application d'une fonction de hachage cryptographique aux dites valeurs de hachage visuel quantifiées et aux dites données sémantiques numériques afin d'obtenir une deuxième valeur de hachage,
- la comparaison de ladite deuxième valeur de hachage et de ladite valeur de hachage décryptée à des fins de vérification,
- un dispositif de sortie couplé au processeur pour indiquer le résultat de la vérification.

15. Système selon la revendication 14,
dans lequel un lecteur de filigrane, un lecteur de code-barres, un lecteur OCR, un lecteur d'étiquette de radio-identification ou un lecteur de bande magnétique est fourni pour extraire la signature numérique dudit sceau numérique.

16. Procédé selon l'une des revendications 1 à 6 et 8 à 13,
dans lequel ledit document analogique est l'un d'un document d'identification comprenant au moins des données personnelles en tant que données sémantiques et une photo en tant que données graphiques, un billet d'entrée à un événement ou un document de preuve d'autorité.

17. Procédé selon l'une des revendications 1 à 6 et 8 à 13,
dans lequel lesdites données graphiques contiennent en dehors d'une photo, un graphisme bidimensionnel et des données audio ou vidéo.
